(19) Europäisches Patentamt
European Patent Office
Office européen des brevets

(11) EP 4 389 845 A1

(12) **EUROPEAN PATENT APPLICATION**

(43) Date of publication:
**26.06.2024 Bulletin 2024/26**

(21) Application number: **23206859.3**

(22) Date of filing: **30.10.2023**

(51) International Patent Classification (IPC):
***C09J 7/38*** *(2018.01)* ***H01M 10/052*** *(2010.01)*

(52) Cooperative Patent Classification (CPC):
**H01M 10/052; C09J 7/385;** C09J 2203/33; C09J 2301/124; C09J 2301/302; C09J 2433/00

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **19.12.2022 KR 20220178453**
**09.05.2023 KR 20230059939**

(71) Applicant: **Samsung SDI Co., Ltd.**
**Yongin-si, Gyeonggi-do 17084 (KR)**

(72) Inventors:
- **CHO, Ik Hwan**
  **17084 Yongin-si (KR)**
- **PARK, Jinhwan**
  **17084 Yongin-si (KR)**
- **KIM, Taejung**
  **17084 Yongin-si (KR)**
- **PARK, Sanghun**
  **17084 Yongin-si (KR)**
- **KIM, Dae Kyu**
  **17084 Yongin-si (KR)**
- **KWAK, Byeongdo**
  **17084 Yongin-si (KR)**
- **WOO, Changhee**
  **17084 Yongin-si (KR)**

(74) Representative: **Marks & Clerk LLP**
**15 Fetter Lane**
**London EC4A 1BW (GB)**

(54) **SEALING TAPE FOR RECHARGEABLE LITHIUM BATTERY AND RECHARGEABLE LITHIUM BATTERY INCLUDING THE SAME**

(57) A sealing tape for a rechargeable lithium battery and a rechargeable lithium battery including the sealing tape are provided. The sealing tape for a rechargeable lithium battery includes a single-layer adhesive layer having adhesiveness on both opposite surfaces of the adhesive layer, wherein the adhesive layer includes a (meth)acrylic copolymer and a crosslinking agent, and the (meth)acrylic copolymer includes a moiety derived from a first substituted or unsubstituted C1 to C20 alkyl (meth)acrylate-based compound; a moiety derived from a second substituted or unsubstituted C3 to C20 cycloalkyl (meth)acrylate-based compound; a moiety derived from a third hydroxy group-containing compound; and a moiety derived from a fourth unsaturated morpholine-containing compound.

FIG. 1

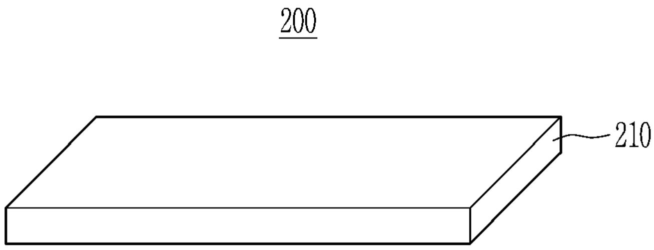


EP 4 389 845 A1

## Description

## BACKGROUND

### Field

One or more embodiments of the present disclosure relate to a sealing tape for a rechargeable lithium battery and a rechargeable lithium battery including the sealing tape.

### Description of the Related Art

In general, when a wound type or kind (jelly-roll type or kind) electrode assembly is housed in a battery case to manufacture a battery, a tape is placed on the outermost side of the electrode assembly. The tape may keep the electrode assembly maintained in the wound state during the subsequent process.
However, in order for the electrode assembly to be housed in the battery case, the electrode assembly should have a smaller size than the battery case. Accordingly, a set or predetermined gap may be inevitably created between an inner wall of the battery case and the electrode assembly.
Due to the gap between the inner wall of the battery case and the electrode assembly, the electrode assembly in the battery case may be easily rotated or moved by external vibration or impact. Such movement of the electrode assembly may increase internal resistance of the battery and cause a damage of an electrode tab, etc. and thus greatly deteriorate performance of the battery.
To address the issue, a sealing tape may be placed in the gap between the inner wall of the battery case and the electrode assembly to fix the electrode assembly to the inner wall of the battery case. However, when the sealing tape is placed in such manner, the electrode assembly may be detached from the inner wall of the battery case due to deterioration of adhesive strength of the sealing tape or shrinkage through a reaction with an electrolyte solution.

## SUMMARY

One or more aspects of embodiments of the present disclosure are directed toward a sealing tape capable of preventing or reducing detachment of an electrode assembly from an inner wall of a battery case of a battery while constantly securing a gap between the inner wall of the battery case and the electrode assembly.
One or more aspects of embodiments of the present disclosure are directed toward a rechargeable lithium battery including the sealing tape.
Additional aspect(s) may be set forth in part in the description which follows and, in part, will be apparent from the description, or may be learned by practice of the presented embodiments of the disclosure.
According to one or more embodiments of the present disclosure, a sealing tape includes a double-sided adhesive layer that can expand in response to an electrolyte solution while having sufficient adhesive strength.
In one or more embodiments, a sealing tape for a rechargeable lithium battery includes an adhesive layer (e.g., a single-layer adhesive layer) having adhesiveness on both (e.g., simultaneously on both opposite) surfaces thereof, the adhesive layer includes a (meth)acrylic copolymer and a crosslinking agent, and the (meth)acrylic copolymer includes a moiety derived from a first substituted or unsubstituted C1 to C20 alkyl (meth)acrylate-based compound (i.e., first compound); a moiety derived from a second substituted or unsubstituted C3 to C20 cycloalkyl (meth)acrylate-based compound (i.e., second compound); a moiety derived from a third hydroxy group-containing compound (i.e., third compound); and a moiety derived from a fourth unsaturated morpholine-containing compound (i.e., fourth compound).
The sealing tape of one or more embodiments may be attached to an external gap where a fluid (e.g., an electrolyte solution) does not exist and/or an internal gap where the fluid exists, and thus while constantly securing a gap between the inner wall of the battery case and the electrode assembly, separation of the electrode assembly from the inner wall of the battery case may be prevented or reduced.
In one or more embodiments, a rechargeable lithium battery includes an electrode assembly, an electrolyte solution impregnated in the electrode assembly, the sealing tape of one or more embodiments attached to at least a portion of an inside of the electrode assembly, and a battery case accommodating the electrode assembly.
In one or more embodiments, in a rechargeable lithium battery to which the sealing tape of one or more embodiments is applied, an increase in internal resistance of the battery, damage to an electrode tab, and/or the like are suppressed or reduced; and the performance of the battery may be maintained.
At least some of the above and other features of the invention are set out in the claims.

## BRIEF DESCRIPTION OF THE DRAWINGS

The accompanying drawings are included to provide a further understanding of the present disclosure, and are incorporated in and constitute a part of this specification. The drawings illustrate example embodiments of the present disclosure and, together with the description, serve to explain principles of present disclosure.

FIG. 1 and FIG. 2 are schematic views each showing a sealing tape according to one or more embodiments of the present disclosure.
FIG. 3 is a schematic view showing a position where a sealing tape of one or more embodiments is placed according to one or more embodiments of the present disclosure.
FIG. 4 is a view structurally illustrating a polymer having a semi-interpenetrating polymer network (semi-IPN) structure according to one or more embodiments of the present disclosure.
FIG. 5 is a schematic view showing a rechargeable lithium battery according to one or more embodiments.
FIG. 6A and FIG. 6B are schematic views showing a method of measuring peel strength for a sealing tape according to one or more embodiments of the present disclosure.
FIG. 7A and FIG. 7B are schematic views showing a method of measuring creep for a sealing tape according to one or more embodiments of the present disclosure.

## DETAILED DESCRIPTION

The present disclosure may be modified in many alternate forms, and thus specific embodiments will be exemplified in the drawings and described in more detail. It should be understood, however, that it is not intended to limit the present disclosure to the particular forms disclosed, but rather, is intended to cover all modifications, equivalents, and alternatives falling within the scope of the present disclosure.

Hereinafter, example embodiments will be described in more detail so that those of ordinary skill in the art can easily implement them. However, this disclosure may be embodied in many different forms and is not construed as limited to the example embodiments set forth herein.

The terminology utilized herein is utilized to describe embodiments only, and is not intended to limit the present disclosure. The singular expression includes the plural expression unless the context clearly dictates otherwise.

As utilized herein, "a combination thereof" refers to a mixture, a laminate, a composite, a copolymer, an alloy, a blend, a reaction product, and/or the like of constituents.

Herein, it should be understood that terms such as "comprise(s)," "include(s)," or "have/has" are intended to designate the presence of an embodied feature, number, step, element, or a combination thereof, but it does not preclude the possibility of the presence or addition of one or more other features, numbers, steps, elements, or a combination thereof.

In the drawings, the thickness of layers, films, panels, regions, etc., may be exaggerated for clarity, and like reference numerals designate like elements throughout the present disclosure, and duplicative descriptions thereof may not be provided for conciseness. It will be understood that when an element such as a layer, film, region, or substrate is referred to as being "on" another element, it may be directly on the other element or intervening elements may also be present. In contrast, when an element is referred to as being "directly on" another element, there are no intervening elements present.

In some embodiments, "layer" as utilized herein includes not only a shape formed on the whole surface when viewed from a plan view, but also a shape formed on a partial surface.

As utilized herein, if (e.g., when) a specific definition is not otherwise provided, the term "substituted" refers to replacement of at least one hydrogen of a compound or a substituent by a substituent selected from a halogen (F, Cl, Br, or I), a hydroxy group, C1 to C20 alkoxy group, a nitro group, a cyano group, an amine group, an imino group, an azido group, an amidino group, a hydrazino group, a hydrazono group, a carbonyl group, a carbamoyl group, a thiol group, an ester group, an ether group, a carboxyl group or a salt thereof, a sulfonic acid group or a salt thereof, a phosphoric acid group or a salt thereof, a C1 to C20 alkyl group, a C2 to C20 alkenyl group, a C2 to C20 alkynyl group, a C6 to C30 aryl group, a C3 to C20 cycloalkyl group, a C3 to C20 cycloalkenyl group, a C3 to C20 cycloalkynyl group, a C2 to C20 heterocycloalkyl group, a C2 to C20 heterocycloalkenyl group, a C2 to C20 heterocycloalkynyl group, and/or a combination thereof.

As utilized herein, if (e.g., when) a specific definition is not otherwise provided, the terms "heterocycloalkyl group", "heterocycloalkenyl group", "heterocycloalkynyl group", and "heterocycloalkylene group" refer to cycloalkyl, cycloalkenyl, cycloalkynyl, and cycloalkylene in which at least one N, O, S, or P heteroatom exists in the cyclic compound, respectively.

As utilized herein, if (e.g., when) a specific definition is not otherwise provided, the term "(meth)acrylate" refers to both (e.g., simultaneously) "acrylate" and "methacrylate".

As utilized herein, if (e.g., when) a definition is not otherwise provided, the term "combination" refers to mixing or copolymerization. Further, "copolymerization" refers to a block copolymerization or a random copolymerization, and "copolymer" refers to a block copolymer or a random copolymer.

In the chemical formula of the present disclosure, unless a specific definition is otherwise provided, hydrogen is bonded at the position when a chemical bond is not drawn where supposed to be given.

As utilized herein, if (e.g., when) a specific definition is not otherwise provided, "*" indicates a point where the same or different atom or chemical formula/moiety is linked.

In the present disclosure, "moiety" refers to a certain part or unit derived from a specific compound when a specific compound participates in a chemical reaction and is included in a polymerization reaction product. For example, in a polyester resin, the "moiety" derived from a first aromatic dicarboxylic acid compound refers to a certain part or unit derived from the first aromatic dicarboxylic acid compound.

As utilized herein, if (e.g., when) a definition is not otherwise provided, the term "particle diameter" of a polymer may refer to a diameter of the "polymer" particle, and the particle diameter may be a "Z-average" value of particle diameters measured through a dynamic light scattering method.

"Thickness" may be measured through an image taken with an optical microscope such as a scanning electron microscope.

## Sealing Tape

In one or more embodiments, a sealing tape for a rechargeable lithium battery includes an adhesive layer (e.g., a single-layer adhesive layer) having adhesiveness on both (e.g., simultaneously on two opposite) surfaces of the adhesive layer, wherein the adhesive layer includes a (meth)acrylic copolymer and a crosslinking agent (e.g., a (meth)acryl-based crosslinking agent).

The (meth)acrylic copolymer includes a moiety derived from a first substituted or unsubstituted C1 to C20 alkyl (meth)acrylate-based compound; a moiety derived from a second substituted or unsubstituted C3 to C20 cycloalkyl (meth)acrylate-based compound; a moiety derived from a third hydroxy group-containing compound; and a moiety derived from a fourth unsaturated morpholine-containing compound.

(1) A sealing tape commonly or suitably utilized in the art includes a single-sided adhesive layer, and the single-sided adhesive layer has adhesiveness only on one surface and no adhesiveness on the other surface (e.g., on the opposite other side).

Accordingly, the sealing tape commonly or suitably utilized in the art necessarily requires a substrate layer in order to attach two different objects. For example, a sealing tape commonly or suitably utilized in the art includes a substrate layer; and a single-sided adhesive layer on both (e.g., simultaneously on two opposite) surfaces of the substrate layer, respectively, two different objects are attached to each other.

According to one or more embodiments of the present disclosure, referring to FIG. 1, a sealing tape 200 of one or more embodiments may include a double-sided adhesive layer 210, and the double-sided adhesive layer 210 may be a single-layer adhesive layer having adhesiveness on both (e.g., simultaneously on two opposite) surfaces thereof.

For example, the sealing tape of one or more embodiments does not require a separate substrate layer in order to attach two different objects. For example, even when the sealing tape of one or more embodiments is made of only the double-sided adhesive layer without a separate substrate layer, two different objects may be attached to each other.

Accordingly, the sealing tape 200 of one or more embodiments, as shown in FIG. 1, may be a substrate-free sealing tape made of only the double-sided adhesive layer 210 without a separate substrate layer. If (e.g., when) the sealing tape of one or more embodiments is a substrate-free sealing tape, the capacity of the electrode plate may be relatively increased while having a relatively thinner thickness than a sealing tape including a substrate layer.

As shown in FIG. 2, the sealing tape 200 of one or more embodiments may further include a separate substrate layer 220 to enhance mechanical strength. This will be described later.

(2) In general, the sealing tape commonly or suitably utilized in the art includes a material which shrinks by a reaction with an electrolyte solution and thus is usually applied to an external gap (e.g., a gap between an inner wall of a battery case and an electrode assembly) where fluids do not exist.

However, even though the sealing tape commonly or suitably utilized in the art is applied to the external gap, its adhesive strength itself may be deteriorated over time, or the sealing tape shrinks by a reaction with an electrolyte solution, resulting in detaching the electrode assembly from the inner wall of the battery case.

According to one or more embodiments of the present disclosure, the sealing tape of one or more embodiments may include a double-sided adhesive layer made of a material reacting with the electrolyte solution but rather expanding and thus may be applied to an internal gap (e.g., at least a portion inside the electrode assembly) where a fluid (e.g., an electrolyte solution) exists as well as the external gap where no fluids exist.

For example, the sealing tape of one or more embodiments, as shown in FIG. 3, may be attached onto an inner side of the outermost portion of the electrode assembly. The electrolyte solution, which is a type or kind of fluid, may exist inside the electrode assembly.

The sealing tape of one or more embodiments reacts the electrolyte solution and expands in the state of being attached on to the inner side of the outermost portion of the electrode assembly, and thus constantly maintains the gap between the inner wall of the battery case and the electrode assembly and prevents or reduces the detachment of the electrode assembly from the inner wall of the battery case.

The property of reacting with the electrolyte solution and expanding is due to a (meth)acrylic copolymer and a crosslinking agent constituting the adhesive layer.

(3) Comprehensively, the sealing tape of one or more embodiments includes a double-sided adhesive layer usable without specific description, and the double-sided adhesive layer has the property of reacting with an electrolyte solution and expanding.

Therefore, the sealing tape of one or more embodiments may be attached to an external gap where fluid does not exist and/or an internal gap where fluid exists, and thus while constantly securing a gap between the inner wall of the battery case and the electrode assembly, separation of the electrode assembly from the inner wall of the battery case may be prevented or reduced.

In one or more embodiments, in a rechargeable lithium battery to which the sealing tape of one or more embodiments is applied, an increase in internal resistance of the battery, damage to an electrode tab, and/or the like are suppressed or reduced; and the performance of the battery may be maintained.

Hereinafter, the sealing tape of one or more embodiments will be described in more detail.

**Semi-IPN Structure**

In the adhesive layer 200, the (meth)acrylic copolymer may be crosslinked by the crosslinking agent to form a polymer having a semi-interpenetrating polymer network (semi-IPN) structure.

For example, as shown in FIG. 4, the polymer 300 having the semi-interpenetrating polymer network (semi-IPN) structure may include a network structured polymer formed by crosslinking the (meth)acrylic copolymer 1 by the crosslinking agent 2; and independently of the network structured polymer, a linear polymer including the (meth)acrylic copolymer 1'.

If (e.g., when) the (meth)acrylic copolymer 1 is crosslinked by the crosslinking agent 2 to form a polymer 300 having a semi-IPN structure, in the case (e.g., embodiments) where the (meth)acrylic copolymer 1 and the crosslinking agent 2 exist independently (blended), adhesive strength, mechanical properties, chemical resistance, expandability when impregnated with an electrolyte solution, etc. of the (meth)acrylic copolymer may be improved compared with the case (e.g., an embodiment) where only one of the above two materials is present.

**Crosslinking Degree of Adhesive Layer**

In one or more embodiments, a crosslinking degree of the adhesive layer may be about 85 to about 98%. Herein, the crosslinking degree may be confirmed by a gel fraction (gel contents). If (e.g., when) the crosslinking degree of the adhesive layer is less than about 85%, the adhesive layer may be swollen and dispersed. In contrast, if (e.g., when) the crosslinking degree of the adhesive layer exceeds about 98%, the adhesive layer may have too high a stiffness.

**Crosslinking Agent**

The crosslinking agent may be a multi-functional (meth)acrylate capable of curing with active energy rays.

Non-limiting examples of the multifunctional (meth)acrylate may include bifunctional acrylates such as 1,4-butanediol di(meth)acrylate, 1,6-hexanediol di(meth)acrylate, neopentylglycol di(meth)acrylate, polyethylene glycol di(meth)acrylate, neopentylglycol adipate di(meth)acrylate, dicyclopentanyl di(meth)acrylate, caprolactone modified dicyclopentenyl di(meth)acrylate, ethylene oxide modified di(meth)acrylate, di(meth)acryloxy ethyl isocyanurate, allyl cyclohexyl di(meth)acrylate, tricyclodecanedimethanol(meth)acrylate, dimethylol dicyclopentanedi(meth)acrylate, ethylene oxide modified hexahydrophthalic acid di(meth)acrylate, neopentylglycol modified trimethylpropane di(meth)acrylate, adamantane di(meth)acrylate, and/or 9,9-bis[4-(2-acryloyloxyethoxy)phenyl]fluorene; trifunctional acrylates such as trimethylolpropane tri(meth)acrylate, dipentaerythritol tri(meth)acrylate, propionic acid modified dipentaerythritol tri(meth)acrylate, pentaerythritol tri(meth)acrylate, propylene oxide modified trimethylol propane tri(meth)acrylate, trifunctional urethane (meth)acrylate, and/or tris(meth)acryloxyethyl isocyanurate; tetrafunctional acrylates such as diglycerine tetra(meth)acrylate and/or pentaerythritoltetra(meth)acrylate; pentafunctional acrylates such as dipentaerythritol penta(meth)acrylate; and/or hexafunctional acrylates such as acrylate dipentaerythritol hexa(meth)acrylate, caprolactone modified dipentaerythritol hexa(meth)acrylate, and/or a reaction product of a urethane (meth)acrylate (e.g., isocyanate monomer) and trimethylolpropane tri(meth)acrylate, and/or the like, but embodiments of the present disclosure are not limited thereto. These may be utilized alone or in combination of two or more.

In some embodiments, isocyanate-based, epoxy-based, aziridine-based, melamine-based, amine-based, imide-based, carbodiimide-based, and amide-based crosslinking agents, or a combination thereof may be utilized.

In the adhesive layer, a content (e.g., amount) of the crosslinking agent may be about 0.01 to about 5 parts by weight, about 0.03 to about 3 parts by weight, or about 0.05 to about 2 parts by weight, based on 100 parts by weight of the (meth)acrylic copolymer. Within this range, a semi-IPN structure may be stably formed.

### (Meth)acrylic Copolymer

In one or more embodiments, the (meth)acrylic copolymer has suitable adhesive strength, mechanical properties, chemical resistance, expandability when impregnated with an electrolyte solution. Thus, the same effect as above may be obtained.

In one or more embodiments, the (meth)acrylic copolymer may be acid-free (e.g., carboxylic acid-free). If (e.g., when) an acid (e.g., a carboxylic acid) is included in the adhesive layer, a complex is formed between the carboxyl group of the acid and the lithium cation ($Li^+$) of the electrolyte solution, which may adversely affect the efficiency and cycle-life of the battery.

Because the adhesive layer including the (meth)acrylic copolymer including the morpholine group does not contain an acid component such as (meth)acrylic acid, the acid value may be less than or equal to about 0.5 mg KOH/g.

However, if (e.g., when) acid-free, the electrode assembly may be unwound before or after being housed in the battery case due to poor adhesion to metal and/or the like.

In order to address the issues, a moiety derived from a polar monomer compound may be required and desirable, and in one or more embodiments, a moiety derived from a first substituted or unsubstituted C1 to C20 alkyl (meth)acrylate-based compound; a moiety derived from a substituted or unsubstituted C3 to C20 cycloalkyl (meth)acrylate-based second compound; a moiety derived from a third compound containing a hydroxyl group; and a moiety derived from a fourth unsaturated compound containing a morpholine group to enhance adhesive strength.

Hereinafter, each moiety constituting the (meth)acrylic copolymer including the morpholine group will be described.

### Moiety Derived from First Compound

In one or more embodiments, the (meth)acrylic copolymer including the morpholine group includes a moiety derived from a first compound.

The moiety derived from the first compound refers to a moiety derived from the first compound when the first compound undergoes a chemical reaction (e.g., polymerization) to form the (meth)acrylic copolymer including the morpholine group.

The first compound is a substituted or unsubstituted C1 to C20 alkyl (meth)acrylate-based compound.

For example, the first compound may be ethyl hexyl (meth)acrylate (e.g., 2-ethylhexyl acrylate), methyl (meth)acrylate, ethyl (meth)acrylate, propyl (meth)acrylate, butyl (meth)acrylate, pentyl (meth)acrylate, hexyl (meth)acrylate, heptyl (meth)acrylate, octyl (meth)acrylate, nonyl (meth)acrylate, decyl (meth)acrylate, dodecyl(meth) acrylate, lauryl (meth)acrylate, and/or the like, but embodiments of the present disclosure are not necessarily limited thereto. These (meth)acrylates may be applied alone or in combination of two or more. Herein, (meth)acrylate refers to both (e.g., simultaneously) acrylate and/or methacrylate.

Based on 100 wt% of a total amount of the (meth)acrylic copolymer including the morpholine group, the moiety derived from the first compound may be included in an amount of about 40 to about 95 wt% (e.g. 60 to about 95 wt%). Within the range, no air bubbles or floating occurs under heat-resistant and moisture-resistant conditions, and it has excellent or suitable durability characteristics.

### Moiety Derived from Second Compound

In one or more embodiments, the (meth)acrylic copolymer including the morpholine group includes a moiety derived from a second compound.

The moiety derived from the second compound refers to a moiety derived from the second compound when the second compound undergoes a chemical reaction (e.g., polymerization) to form the (meth)acrylic copolymer including the morpholine group.

The second compound is a substituted or unsubstituted C3 to C20 cycloalkyl (meth)acrylate-based compound.

For example, the second compound may include isobornyl (meth)acrylate, bornyl (meth)acrylate, cyclohexyl (meth)acrylate, and/or the like, but embodiments of the present disclosure are not necessarily limited thereto. These

(meth)acrylates may be applied alone or in combination of two or more.

Based on 100 wt% of a total amount of the (meth)acrylic copolymer including the morpholine group, the moiety derived from the second compound may be included in an amount of about 0.5 to about 25 wt% (e.g., about 0.5 to about 20 wt%). Within the above range, durability is improved and initial adhesive strength may be secured.

**Moiety Derived from Third Compound**

In one or more embodiments, the (meth)acrylic copolymer including the morpholine group includes a moiety derived from a third compound.

The moiety derived from the third compound refers to a moiety derived from the third compound when the third compound undergoes a chemical reaction (e.g., polymerization) to form the (meth)acrylic copolymer including the morpholine group.

The third compound is a hydroxy group-containing compound.

For example, the third compound may be a C1 to C20 alkyl (meth)acrylate-based compound substituted with a hydroxyl group.

For example, the third compound may be 2-hydroxyethyl (meth)acrylate, 4-hydroxybutyl (meth)acrylate, 2-hydroxypropyl (meth)acrylate, 2-hydroxybutyl (meth)acrylate, 6-hydroxyhexyl (meth)acrylate, 1,4-cyclohexanedimethanol mono(meth)acrylate, chloro-2-hydroxypropyl acrylate, diethylene glycol mono(meth)acrylate, allyl alcohol, and/or the like, but embodiments of the present disclosure are not necessarily limited thereto. These (meth)acrylates may be applied alone or in combination of two or more.

Based on 100 wt% of a total amount of the (meth)acrylic copolymer including the morpholine group, the moiety derived from the third compound may be included in an amount of about 0.5 to about 25 wt%. There is an effect of increasing adhesive strength within the above range, excellent or suitable durability, and no air bubbles are generated under moisture-resistant conditions.

**Moiety Derived from Fourth Compound**

In one or more embodiments, the (meth)acrylic copolymer including the morpholine group includes a moiety derived from a fourth compound.

The moiety derived from the fourth compound refers to a moiety derived from the fourth compound when the fourth compound undergoes a chemical reaction (e.g., polymerization) to form the (meth)acrylic copolymer including the morpholine group.

The fourth compound is an unsaturated morpholine-containing compound.

For example, the fourth compound is an unsaturated morpholine-containing compound, and may be a compound having an unsaturated group and a morpholine group.

For example, the fourth compound may be vinyl morpholine, acryloyl morpholine, methacryloyl morpholine, and/or the like, but embodiments of the present disclosure are not necessarily limited thereto. These morpholines may be utilized alone or in combination of two or more.

Based on 100 wt% of a total amount of the (meth)acrylic copolymer including the morpholine group, the moiety derived from the fourth compound, may be included in an amount of about 0.1 to about 15 wt%, about 0.5 to about 10 wt%, or about 1 to about 5 wt%. Within the above range, durability and initial adhesive strength are improved.

**Moiety Derived from Fifth Compound**

In one or more embodiments, the (meth)acrylic copolymer including the morpholine group may be polymerized together by adding other copolymerizable monomer compounds in addition to the above-mentioned monomer compounds.

Accordingly, the (meth)acrylic copolymer including the morpholine group may optionally include a moiety derived from a fifth compound (e.g., different from the first to fourth compound).

The moiety derived from the fifth compound refers to a moiety derived from the fifth compound when the fifth compound undergoes a chemical reaction (e.g., polymerization) to form the (meth)acrylic copolymer including the morpholine group.

For example, in some embodiments, a moiety derived from a fifth compound having an ethylene oxide group may be further included, and in some embodiments, a moiety derived from a sixth compound having the same positive birefringence as aromatic (meth)acrylate may be further included.

Based on 100 wt% of a total amount of the (meth)acrylic copolymer including the morpholine group, the moiety derived from the fifth compound may not be included; but if (e.g., when) included, it may be included in an amount of about 0.1 to about 15 wt%, for example about 0.5 to about 10 wt%, or for example about 1 to about 5 wt%. Within the

above range, durability and initial adhesive strength are excellent or suitable.

**Method for Preparing (Meth)acrylic Copolymer**

In one or more embodiments, the (meth)acrylic copolymer may be prepared by partial polymerization after injecting an initiator into each of the monomer compound components. The polymerization may be performed until a viscosity of the (meth)acrylic copolymer at 25 °C becoming a viscous liquid is of about 1000 to about 4000 cp. Within the above viscosity range, coating may be easy and workability may be improved. The viscosity may be measured at 25 °C using Brookfield DV2T LV TJ0 model equipment at 20 rpm and spindle #5.

In one or more embodiments, a photoinitiator may be desirably applied as the initiator. The photoinitiator may be activated by ultraviolet rays or electron beams to activate a carbon-carbon double bond in the adhesive layer to generate a radical reaction. As examples, an alpha-hydroxy ketone type or kind compound, a benzyl ketal type or kind compound, or a mixture thereof may be utilized, but embodiments of the present disclosure are not limited thereto. For example, in some embodiments, it may be an alpha-hydroxy ketone type or kind compound, 1-hydroxy-cyclohexyl-phenyl-ketone, 2-hydroxy 2-methyl-1-phenyl-1-propanone, 2-hydroxy-1-[4-(2-hydroxyethoxy)phenyl]-2-methyl-1-propanone, 2,2-dimethoxy-2-phenylacetophenone, and/or the like. The photoinitiator may be utilized alone or in combination of two or more. The photoinitiator may be applied in an amount of about 0.001 to about 3 parts by weight, or about 0.003 to about 1 part by weight, based on 100 parts by weight of the (meth)acrylic copolymer. Low light leakage and excellent or suitable durability reliability may be obtained within the above range.

The (meth)acrylic copolymer does not require a process of dissolving in a separate solvent during the coating process. For example, because it is applied without a solvent, the process is simple and the coating process is relatively easy, and it may easily manufacture an adhesive layer having a suitable thickness. The thickness of the adhesive layer will be described later.

**Physical Properties of (Meth)acrylic Copolymer**

The (meth)acrylic copolymer may have a weight average molecular weight of about 500,000 to about 3,000,000 g/mol. Adhesion strength and durability thereof are excellent or suitable within the above range. The weight average molecular weight may be measured utilizing gel permeation chromatography (GPC).

The (meth)acrylic copolymer may have a glass transition temperature (Tg) of - about 40 °C to about -5 °C, for example about -30 °C to about -10 °C. Workability is excellent or suitable in the above range, and durability or adhesion of the (meth)acrylic copolymer is excellent or suitable. The glass transition temperature may be measured utilizing differential scanning calorimetry (DSC) equipment (TA Instrument).

**Properties of Adhesive Layer**

If (e.g., when) based on impregnated in an electrolyte at 25 °C for 120 minutes, an expansion rate of the adhesive layer of one or more embodiments according to Equation 1 may be about 50 to about 150%:

**Equation 1**

$$(B-A)/A$$

In Equation 1,

A is a thickness of the adhesive layer before electrolyte solution impregnation, and
B is a thickness of the adhesive layer after electrolyte solution impregnation.

The electrolyte solution may have the same composition as that of Examples described later.

**Thickness of Adhesive Layer**

A thickness (e.g., a coating thickness) of the adhesive layer is not particularly limited, and an adhesive layer of about 5 to about 150 μm thick may be formed.

If (e.g., when) the sealing tape of one or more embodiments is substrate-free, the adhesive layer may be formed to be about 25 μm to about 150 μm thick. In some embodiments, if (e.g., when) the sealing tape for a rechargeable lithium battery includes a substrate layer, the adhesive layer may be formed to be about 5 μm to about 25 μm thick

separately on both (e.g., simultaneously on two opposite) surfaces of the substrate layer.

### Manufacturing Method of Adhesive Layer

The adhesive layer may be manufactured by curing a pressure-sensitive adhesive composition including the (meth)acrylic copolymer and the crosslinking agent. For example, in one or more embodiments, after coating the pressure-sensitive adhesive composition on a release film, UV curing may be performed. For example, in some embodiments, the UV curing may be performed under conditions of less than or equal to about 50 mW.

In one or more embodiments, the pressure-sensitive adhesive composition may further include, if (e.g., when) necessary, one or more selected from silane coupling agents, curing accelerators, ionic liquids, lithium salts, inorganic fillers, softeners, antioxidants, anti-aging agents, stabilizers, tackifying resins, modified resins, leveling agents, antifoaming agents, plasticizers, dyes, color pigments, pigments such as extender pigments, treatment agents, UV blocking agents, optical whitening agents, dispersing agents, heat stabilizers, light stabilizers, ultraviolet absorbers, antistatic agents, lubricants, and solvents. In some embodiments, the modified resin may be prepared by further including a polyol resin, a phenol resin, an acrylic resin, a polyester resin, a polyolefin resin, an epoxy resin, an epoxidized polybutadiene resin, and/or the like, and may remain on the final adhesive layer.

A thickness (e.g., coating thickness) of the adhesive layer is not particularly limited, and an adhesive layer of about 5 to about 150 μm thick may be formed. In some embodiments, the adhesive layer may be cured in a state in which oxygen is blocked during curing.

### Substrate Layer

In one or more embodiments, the sealing tape of some embodiments may include a single-layer adhesive layer having adhesiveness on both (e.g., simultaneously on two opposite) sides of the single-layer adhesive layer, so that it may be a sealing tape in a substrate-free type or kind without a separate substrate.

In one or more embodiments, the sealing tape of some embodiments may further include a separate substrate layer to enhance mechanical strength. The adhesive layer may be on one surface or both (e.g., simultaneously on two opposite) surfaces of the substrate layer.

The substrate layer may include a urethane film, an acrylic film, an epoxy film, a polyethylene terephthalate (PET) film, a hard coating layer, a poly (ethylene-vinyl acetate) (EVA) film, or a combination thereof.

The substrate layer may have a thickness in a range of about 10 to about 100 μm.

### Width of Sealing Tape

A width of the sealing tape of one or more embodiments may be at least about 20% of a width of the electrode assembly.

An adhesive strength of the sealing tape of one or more embodiments, particularly the adhesive layer, may be at least about 150 gf/cm (i.e., about 150 gram-force/cm) (T-Peel peeling 300 mm/min, 10 μm negative electrode substrate/PSA/10 μm negative electrode substrate). If (e.g., when) the adhesive strength is 150 gf/cm (gram-force/cm) or less, the wound type or kind electrode assembly may be unwound during a subsequent process.

The sealing tape of one or more embodiments, for example, the adhesive layer, may have a strain rate not exceeding 3 times based on its thickness. When an initial strain rate is 3 times or more than the thickness of the adhesive layer, the wound type or kind electrode assembly may be unwound during a subsequent process, which may increase its diameter, and thus unable to be inserted into a battery case.

### Physical Properties of Sealing Tape

In one or more embodiments, the sealing tape of one or more embodiments, for example, the adhesive layer, may exhibit a strain rate after 60s which does not exceed 50% of an initial strain rate of the adhesive layer.

If (e.g., when) larger than 50% of the initial strain rate, the wound type or kind electrode assembly may be unwound during the subsequent process, which may increase its diameter, and thus unable to be inserted into a battery case.

### Rechargeable Lithium Battery

In one or more embodiments, a rechargeable lithium battery includes an electrode assembly; an electrolyte solution impregnated in the electrode assembly; the sealing tape of one or more of the aforementioned embodiments attached to at least a portion of an inside of the electrode assembly; and a battery case accommodating the electrode

assembly.

In one or more embodiments, the electrode assembly may be a wound type or kind electrode assembly, for example, a jelly-roll electrode assembly.

For example, in one or more embodiments, the electrode assembly may be formed by sequentially stacking a first electrode, a separator, and a second electrode and then winding them.

For example, in one or more embodiments, the electrode assembly may include a positive electrode including a positive electrode current collector and a positive electrode active material layer on the positive electrode current collector; a negative electrode including a negative electrode current collector and a negative electrode active material layer on the negative electrode current collector; and a separator separating the positive electrode and the negative electrode.

In one or more embodiments, the sealing tape of one or more embodiments may be attached to at least a portion of the inside of the electrode assembly to reduce a gap between an inner wall of the battery case and the electrode assembly and to fix the electrode assembly.

For example, in one or more embodiments, a portion of the sealing tape may be exposed as an outermost layer of the electrode assembly. After the electrode assembly is placed inside the battery case, the sealing tape is attached to the inside of the outermost layer of the electrode assembly and expands when impregnated with a fluid (e.g., electrolyte solution), thereby indirectly minimizing or reducing the gap between the inner wall of the battery case and the electrode assembly, while exhibiting vibration resistance and shock resistance.

In one or more embodiments, the electrolyte solution may include a carbonate-based solvent, and the carbonate-based solvent may include at least one carbonate-based solvent selected from ethylene carbonate (EC), ethylmethyl carbonate (EMC), propylene carbonate (PC), dimethyl carbonate (DMC), diethyl carbonate (DEC), and dipropyl carbonate (DPC). The electrolyte solution may include about 10 to about 60 wt% of the carbonate-based solvent based on 100 wt% of a total weight of the electrolyte solution.

If (e.g., when) the circumferential length of an outer surface of the electrode assembly is considered to be 1, the sealing tape may have a length smaller than about 0.5.

FIG. 5 is a schematic view illustrating a rechargeable lithium battery according to one or more embodiments of the present disclosure. Referring to FIG. 5, a rechargeable lithium battery 100 according to one or more embodiments may include a battery cell including a positive electrode 114, a negative electrode 112 facing the positive electrode 114, a separator 113 between the positive electrode 114 and the negative electrode 112, an electrolyte solution for a rechargeable lithium battery impregnating the positive electrode 114, negative electrode 112, and separator 113, a battery case 120 containing the battery cell, and a sealing member 140 sealing the battery case 120.

Hereinafter, descriptions overlapping with those described above will not be provided for conciseness, and elements constituting the rechargeable lithium battery will be described in more detail.

## Positive Electrode

The positive electrode may include a positive electrode current collector and a positive electrode active material layer on the positive electrode current collector, and the positive electrode active material layer may include a positive electrode active material.

The positive electrode active material may include one or more lithiated intercalation compounds that reversibly intercalate and deintercalate lithium ions.

For example, in one or more embodiments, the positive electrode active material may include one or more composite oxides of a metal selected from cobalt, manganese, nickel, and a combination thereof, and lithium. Such a positive electrode active material may be at least one of lithium composite oxides represented by Chemical Formula 5.

**Chemical Formula 5** $$Li_xM^1_yM^2_zM^3_{1-y-z}O_{2\pm a}X_a$$

In Chemical Formula 5,
$0.5\leq x\leq 1.8$, $0\leq a\leq 0.1$, $0<y\leq 1$, $0\leq z\leq 1$, $0<y+z\leq 1$, $M^1$, $M^2$, and $M^3$ may each independently be one or more elements selected from metals of nickel (Ni), cobalt (Co), manganese (Mn), aluminium (Al), boron (B), barium (Ba), calcium (Ca), cerium (Ce), chromium (Cr), iron (Fe), molybdenum (Mo), niobium (Nb), silicon (Si), strontium (Sr), magnesium (Mg), titanium (Ti), vanadium (V), tungsten (W), zirconium (Zr), lanthanum (La), and a combination thereof, and X may be one or more elements selected from fluorine (F), sulfur (S), phosphorus (P), and/or chlorine (Cl).

In one or more embodiments, the positive electrode active material corresponding to Chemical Formula 5 may be at least one selected from $LiCoO_2$, $LiNiO_2$, $LiMnO_2$, $LiMn_2O_4$, $LiNi_aMn_bCo_cO_2$ (a+b+c=1), $LiNi_aMn_bCo_cAl_dO_2$ (a+b+c+d=1), and $LiNi_eCo_fAl_gO_2$ (e+f+g=1).

In some embodiments, a material in which a part of the metal of the composite oxide is substituted with a metal other than the metal may be utilized, and a phosphate compound of the composite oxide, for example, in some embodiments, at least one selected from $LiFePO_4$, $LiCoPO_4$, and $LiMnPO_4$ may be utilized. In some embodiments, a material having a coating layer on the surface of the composite oxide may be utilized, or a mixture of the composite oxide and the composite oxide having a coating layer may be utilized. The coating layer may include at least one coating element compound selected from an oxide of a coating element, a hydroxide of a coating element, an oxyhydroxide of a coating element, an oxycarbonate of a coating element, and a hydroxy carbonate of a coating element. The compound for the coating layer may be amorphous or crystalline. The coating element included in the coating layer may include Mg, Al, Co, K, Na, Ca, Si, Ti, V, Sn, Ge, Ga, B, As, Zr, or a combination thereof. The coating layer may be disposed in a method having no adverse influence on properties of a positive electrode active material by utilizing these elements in the compound. For example, the method may include any coating method (e.g., spray coating, dipping, etc.), which will not be illustrated in more detail herein because it is well-known to those skilled in the related field.

In one or more embodiments, a nickel-based positive electrode active material containing nickel may be utilized as the positive electrode active material. In these embodiments, in Chemical Formula 5, $M^1$ may be Ni. For example, in one or more embodiments, the cathode active material selected from $LiNi_bMn_cCo_dO_2$ (b+c+d=1), $LiNi_bMn_cCo_dAl_eO_2$ (b+c+d+e=1), and $LiNi_bCo_dAl_eO_2$ (b+d+e=1) may be high nickel (high Ni)-based positive electrode active material.

In the embodiments of the $LiNi_bMn_cCo_dO_2$ (b+c+d=1) and/or $LiNi_bMn_cCo_dAl_cO_2$ (b+c+d+e=1), the nickel content (e.g., amount) may be greater than or equal to about 60% ($b \geq 0.6$), or greater than or equal to about 80% ($b \geq 0.8$). In the embodiments of the $LiNi_bCo_dAl_eO_2$ (b+d+e=1), the nickel content (e.g., amount) may be greater than or equal to about 60% ($b \geq 0.6$), or greater than or equal to about 80% ($b \geq 0.8$).

In some embodiments, as the positive electrode active material, a nickel-based cobalt-free positive electrode active material that contains nickel but does not contain cobalt may be utilized. In these embodiments, Chemical Formula 5 may be represented by Chemical Formula 5-1:

**Chemical Formula 5-1** $$Li_xNi_yMn_{(1-y)}O_2,$$

wherein, $0.5 \leq x \leq 1.8$, and $0<y<1$.

In one or more embodiments, an amount of the positive electrode active material may be about 90 wt% to about 98 wt% based on a total weight of a positive electrode composition (e.g., the positive electrode active material layer).

Each amount of a conductive material and a binder may be about 1 wt% to about 5 wt% based on a total weight of the positive electrode composition (e.g., the positive electrode active material layer).

The conductive material may be included to impart conductivity to the positive electrode, and any electrically conductive material may be utilized as a conductive material unless it causes a chemical change. Non-limiting examples of the conductive material may include a carbon-based material such as natural graphite, artificial graphite, carbon black, acetylene black, ketjen black, a carbon fiber, and/or the like; a metal-based material of a metal powder and/or a metal fiber including copper, nickel, aluminium, silver, and/or the like; a conductive polymer such as a polyphenylene derivative; or a mixture thereof.

The binder improves binding properties of positive electrode active material particles with one another and with the positive electrode current collector. Examples thereof may include polyvinyl alcohol, carboxylmethyl cellulose, hydroxypropyl cellulose, diacetyl cellulose, polyvinylchloride, carboxylated polyvinylchloride, polyvinylfluoride, an ethylene oxide-containing polymer, polyvinylpyrrolidone, polyurethane, polytetrafluoroethylene, polyvinylidene fluoride, polyethylene, polypropylene, a styrene-butadiene rubber, an acrylated styrene-butadiene rubber, an epoxy resin, nylon, and/or the like, but embodiments of the present disclosure are not limited thereto.

In one or more embodiments, the positive electrode current collector may include Al, plastic, and/or the like, but embodiments of the present disclosure are not limited thereto.

## Negative Electrode

The negative electrode may include a negative electrode current collector and a negative electrode active material layer on the negative electrode current collector and including a negative electrode active material. According to one or more embodiments, the negative electrode may have a structure in which a negative electrode current collector, a negative electrode active material layer, a functional layer, and an adhesive layer are sequentially stacked.

The negative electrode active material may include a material that reversibly intercalates/deintercalates lithium ions, lithium metal, lithium metal alloy, a material capable of doping and dedoping lithium, and/or a transition metal oxide.

The material that reversibly intercalates/deintercalates lithium ions may include, for example, crystalline carbon, amorphous carbon, or a combination thereof as a carbon-based negative electrode active material. The crystalline carbon may be irregular, or sheet, flake, spherical, or fiber shaped natural graphite or artificial graphite. The amorphous carbon may be a soft carbon, a hard carbon, a mesophase pitch carbonization product, calcined coke, and/or the like.

The lithium metal alloy may include an alloy of lithium and one or more metals selected from Na, K, Rb, Cs, Fr, Be, Mg, Ca, Sr, Si, Sb, Pb, In, Zn, Ba, Ra, Ge, Al, and Sn.

The material capable of doping/dedoping lithium may be a Si-based negative electrode active material or a Sn-based negative electrode active material. The Si-based negative electrode active material may include silicon, a silicon-carbon composite, $SiO_x$ ($0 < x < 2$), a Si-Q alloy (wherein Q may be an alkali metal, an alkaline-earth metal, a Group 13 element, a Group 14 element, a Group 15 element, a Group 16 element, a transition metal, a rare earth element, or a combination thereof, but not Si), and the Sn-based negative electrode active material may include Sn, $SnO_2$, a Sn-R alloy (wherein R may be an alkali metal, an alkaline-earth metal, a Group 13 element, a Group 14 element, a Group 15 element, a Group 16 element, a transition metal, a rare earth element, or a combination thereof, but not Sn). In some embodiments, at least one of these materials may be mixed with $SiO_2$. The elements Q and R may each independently be selected from Mg, Ca, Sr, Ba, radium (Ra), scandium (Sc), yttrium (Y), Ti, Zr, hafnium (Hf), rutherfordium (Rf), V, Nb, tantalum (Ta), dubnium (Db), Cr, Mo, W, seaborgium (Sg), technetium (Tc), rhenium (Re), bohrium (Bh), Fe, Pb, ruthenium (Ru), osmium (Os), hassium (Hs), rhodium (Rh), iridium (Ir), palladium (Pd), platinum (Pt), Cu, silver (Ag), gold (Au), Zn, cadmium (Cd), B, Al, gallium (Ga), Sn, In, thallium (Tl), Ge, P, arsenic (As), Sb, bismuth (Bi), S, selenium (Se), tellurium (Te), polonium (Po), and a combination thereof.

The silicon-carbon composite may be, for example, a silicon-carbon composite including a core including crystalline carbon and silicon particles and an amorphous carbon coating layer disposed on the surface of the core. The crystalline carbon may be artificial graphite, natural graphite, or a combination thereof. An amorphous carbon precursor may be a coal-based pitch, mesophase pitch, petroleum-based pitch, coal-based oil, petroleum-based heavy oil, or a polymer resin such as a phenol resin, a furan resin, or a polyimide resin. In one or more embodiments, a content (e.g., amount) of silicon may be about 10 wt% to about 50 wt% based on a total weight of the silicon-carbon composite. In some embodiments, a content (e.g., amount) of the crystalline carbon may be about 10 wt% to about 70 wt% based on a total weight of the silicon-carbon composite, and a content (e.g., amount) of the amorphous carbon may be about 20 wt% to about 40 wt% based on a total weight of the silicon-carbon composite. In some embodiments, a thickness of the amorphous carbon coating layer may be about 5 nm to about 100 nm. An average particle diameter (D50) of the silicon particles may be about 10 nm to about 20 $\mu$m. The average particle diameter (D50) of the silicon particles may be desirably about 10 nm to about 200 nm. In some embodiments, the silicon particles may exist in an oxidized form, and in these embodiments, an atomic content (e.g., amount) ratio of Si:O in the silicon particles indicating a degree of oxidation may be a weight ratio of about 99:1 to about 33:67. In some embodiments, the silicon particles may be $SiO_x$ particles, and a range of x in $SiO_x$ may be greater than about 0 and less than about 2. As utilized herein, when a definition is not otherwise provided, an average particle diameter (D50) indicates a particle where an accumulated volume is about 50 volume% in a particle distribution.

In one or more embodiments, the Si-based negative electrode active material or Sn-based negative electrode active material may be mixed with the carbon-based negative electrode active material. If (e.g., when) the Si-based negative electrode active material or Sn-based negative electrode active material and the carbon-based negative electrode active material are mixed and utilized, a mixing ratio may be a weight ratio of about 1:99 to about 90:10.

In the negative electrode active material layer, the negative electrode active material may be included in an amount of about 95 wt% to about 99 wt% based on a total weight of the negative electrode active material layer.

In some embodiments, the negative electrode active material layer may further include a binder, and may optionally further include a conductive material. A content (e.g., amount) of the binder in the negative electrode active material layer may be about 1 wt% to about 5 wt% based on a total weight of the negative electrode active material layer. In some embodiments, if (e.g., when) the conductive material is further included, the negative electrode active material layer may include about 90 wt% to about 98 wt% of the negative electrode active material, about 1 wt% to about 5 wt% of the binder, and about 1 wt% to about 5 wt% of the conductive material.

The binder serves to well adhere the negative electrode active material particles to each other and also to adhere the negative electrode active material to the negative electrode current collector. The binder may be a water-insoluble binder, a water-soluble binder, or a combination thereof.

Non-limiting examples of the water-insoluble binder may include polyvinyl chloride, carboxylated polyvinyl chloride, polyvinyl fluoride, an ethylene oxide-containing polymer, an ethylene propylene copolymer, polystyrene, polyvinylpyrrolidone, polyurethane, polytetrafluoro ethylene, polyvinylidene fluoride, polyethylene, polypropylene, polyamideimide, polyimide, or a combination thereof.

The water-soluble binder may include a rubber binder or a polymer resin binder. The rubber binder may be selected from a styrene-butadiene rubber, an acrylated styrene-butadiene rubber, an acrylonitrile-butadiene rubber, an acrylic rubber, a butyl rubber, a fluororubber, and a combination thereof. The polymer resin binder may be selected from polyethylene oxide, polyvinylpyrrolidone, polyepichlorohydrin, polyphosphazene, polyacrylonitrile, an ethylene propylene diene copolymer, polyvinylpyridine, chlorosulfonated polyethylene, latex, a polyester resin, an acrylic resin, a phenol resin, an epoxy resin, polyvinyl alcohol, and a combination thereof.

If (e.g., when) a water-soluble binder is utilized as the binder for the negative electrode, a cellulose-based compound capable of imparting viscosity may be further included. As the cellulose-based compound, one or more of carboxymethyl cellulose, hydroxypropylmethyl cellulose, methyl cellulose, or alkali metal salts thereof may be mixed

and utilized. The alkali metal may be Na, K, or Li. An amount of such a thickener utilized may be about 0.1 parts by weight to about 3 parts by weight based on 100 parts by weight of the negative electrode active material.

The conductive material may be included to provide electrode conductivity, and any electrically conductive material may be utilized as a conductive material unless it causes a chemical change. Non-limiting examples of the conductive material may include a carbon-based material such as natural graphite, artificial graphite, carbon black, acetylene black, ketjen black, a carbon fiber, carbon nanotube, and/or the like; a metal-based material of a metal powder and/or a metal fiber including copper, nickel, aluminium, silver, and/or the like; a conductive polymer such as a polyphenylene derivative; or a mixture thereof.

In one or more embodiments, the negative electrode current collector may include one selected from a copper foil, a nickel foil, a stainless steel foil, a titanium foil, a nickel foam, a copper foam, a polymer substrate coated with a conductive metal, plastic, and a combination thereof.

**Electrolyte Solution**

The electrolyte solution may include a non-aqueous organic solvent and a lithium salt.

The non-aqueous organic solvent serves as a medium for transmitting ions taking part in the electrochemical reaction of a battery. The non-aqueous organic solvent may be a carbonate-based, ester-based, ether-based, ketone-based, or alcohol-based solvent, or aprotic solvent. The carbonate-based solvent may be dimethyl carbonate (DMC), diethyl carbonate (DEC), dipropyl carbonate (DPC), methylpropyl carbonate (MPC), ethylpropyl carbonate (EPC), methylethyl carbonate (MEC), ethylene carbonate (EC), propylene carbonate (PC), butylene carbonate (BC), and/or the like. The ester-based solvent may be methyl acetate, ethyl acetate, n-propyl acetate, dimethyl acetate, methyl propionate, ethyl propionate, γ-butyrolactone, decanolide, valerolactone, mevalonolactone, caprolactone, and/or the like. The ether-based solvent may be dibutyl ether, tetraglyme, diglyme, dimethoxyethane, 2-methyltetrahydrofuran, tetrahydrofuran, and/or the like. The ketone-based solvent may be cyclohexanone, and/or the like. In some embodiments, the alcohol-based solvent may be ethyl alcohol, isopropyl alcohol, etc., and the aprotic solvent may be nitriles such as R-CN (where R is a C2 to C20 linear, branched, or cyclic hydrocarbon group and may include a double bond, an aromatic ring, or an ether bond), amides such as dimethylformamide, dioxolanes such as 1,3-dioxolane, sulfolanes, and/or the like.

The non-aqueous organic solvent may be utilized alone or in a mixture. If (e.g., when) the organic solvent is utilized in a mixture, a mixing ratio may be controlled or selected in accordance with a desirable battery performance.

In some embodiments, in the carbonate-based solvent, a mixture of a cyclic carbonate and a chain carbonate may be utilized. In these embodiments, if (e.g., when) the cyclic carbonate and the chain carbonate are mixed in a volume ratio of about 1:1 to about 1:9, the electrolyte may exhibit excellent or suitable performance.

In one or more embodiments, the non-aqueous organic solvent may further include an aromatic hydrocarbon-based organic solvent in addition to the carbonate-based solvent. The carbonate-based solvent and the aromatic hydrocarbon-based organic solvent may be mixed in a volume ratio of about 1:1 to about 30:1.

As the aromatic hydrocarbon-based solvent, an aromatic hydrocarbon-based compound represented by Chemical Formula I may be utilized.

## Chemical Formula I

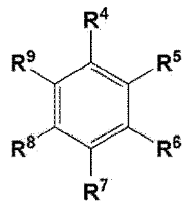

In Chemical Formula I, $R^4$ to $R^9$ may each independently be the same or different and may each independently be selected from hydrogen, a halogen, a C1 to C10 alkyl group, a haloalkyl group, and a combination thereof.

Non-limiting examples of the aromatic hydrocarbon-based solvent may be benzene, fluorobenzene, 1,2-difluorobenzene, 1,3-difluorobenzene, 1,4-difluorobenzene, 1,2,3-trifluorobenzene, 1,2,4-trifluorobenzene, chlorobenzene, 1,2-dichlorobenzene, 1,3-dichlorobenzene, 1,4-dichlorobenzene, 1,2,3-trichlorobenzene, 1,2,4-trichlorobenzene, iodobenzene, 1,2-diiodobenzene, 1,3-diiodobenzene, 1,4-diiodobenzene, 1,2,3-triiodobenzene, 1,2,4-triiodobenzene, toluene, fluorotoluene, 2,3-difluorotoluene, 2,4-difluorotoluene, 2,5-difluorotoluene, 2,3,4-trifluorotoluene, 2,3,5-trifluorotoluene, chlorotoluene, 2,3-dichlorotoluene, 2,4-dichlorotoluene, 2,5-dichlorotoluene, 2,3,4-trichlorotoluene, 2,3,5-trichlorotoluene, iodotoluene, 2,3-diiodotoluene, 2,4-diiodotoluene, 2,5-diiodotoluene, 2,3,4-triiodotoluene, 2,3,5-triiodotoluene, xylene, or any combination thereof.

In one or more embodiments, the electrolyte solution may further include vinylene carbonate or an ethylene carbonate-based compound of Chemical Formula II, as an additive, in order to improve cycle-life of a battery.

## Chemical Formula II

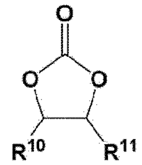

In Chemical Formula II, $R^{10}$ and $R^{11}$ may each independently be the same or different, and may each independently be selected from hydrogen, a halogen, a cyano group, a nitro group, and a fluorinated C1 to C5 alkyl group, provided that at least one of $R^{10}$ or $R^{11}$ is selected from a halogen, a cyano group, a nitro group, and a fluorinated C1 to C5 alkyl group, and both of $R^{10}$ and $R^{11}$ are not (each) hydrogen simultaneously.

Non-limiting examples of the ethylene carbonate-based compound may be difluoroethylene carbonate, chloroethylene carbonate, dichloroethylene carbonate, bromoethylene carbonate, dibromoethylene carbonate, nitroethylene carbonate, cyanoethylene carbonate, and/or fluoroethylene carbonate. An amount of the additive for improving cycle-life may be utilized within an appropriate or suitable range.

The lithium salt dissolved in the non-aqueous organic solvent supplies lithium ions in a battery, enables a basic operation of a rechargeable lithium battery, and improves transportation of the lithium ions between positive and negative electrodes.

Non-limiting examples of the lithium salt may include at least one selected from $LiPF_6$, $LiBF_4$, $LiSbF_6$, $LiAsF_6$, $LiN(SO_2C_2F_5)_2$, $Li(CF_3SO_2)_2N$, $LiN(SO_3C_2F_5)_2$, $Li(FSO_2)_2N$ (lithium bis(fluorosulfonyl)imide; LiFSI), $LiC_4F_9SO_3$, $LiClO_4$, $LiAlO_2$, $LiAlCl_4$, $LiPO_2F_2$, $LiN(C_xF_{2x+1}SO_2)(C_yF_{2y+1}SO_2)$ (wherein x and y are natural numbers, for example, an integer in a range of 1 to 20), lithium difluoro(bisoxolato) phosphate, LiCl, LiI, $LiB(C_2O_4)_2$ (lithium bis(oxalato) borate; LiBOB), and lithium difluoro(oxalato)borate (LiDFOB).

The lithium salt may be utilized in a concentration in a range of about 0.1 M to about 2.0 M. If (e.g., when) the lithium salt is included at the above concentration range, the electrolyte solution may have excellent or suitable performance and lithium ion mobility due to optimal or suitable conductivity and viscosity of the electrolyte solution.

In one or more embodiments, the electrolyte solution may further include a gel polymer electrolyte, a polymer electrolyte, or a combination thereof.

### Separator

The separator 113 may be any generally-utilized separator in a rechargeable lithium battery which may separate the positive electrode 114 and the negative electrode 112 and provide a transporting passage for lithium ions.

For example, it may have low resistance to ion transport and excellent or suitable impregnation for an electrolyte solution. For example, in one or more embodiments, the separator may be selected from a glass fiber, polyester, Teflon, polyethylene, polypropylene, polytetrafluoroethylene, or a combination thereof. In some embodiments, the separator may have a form of a non-woven fabric or a woven fabric. For example, in some embodiments, in a lithium ion battery, a polyolefin-based polymer separator such as polyethylene and polypropylene may be mainly utilized. In order to ensure the heat resistance or mechanical strength, a coated separator including a ceramic component or a polymer material may be utilized. In some embodiments, it may have a mono-layered or multi-layered structure.

Rechargeable lithium batteries may be classified as lithium ion batteries, lithium ion polymer batteries, or lithium polymer batteries according to the presence of a separator and the type or kind of electrolyte solution utilized therein. The rechargeable lithium batteries may have a variety of shapes and sizes, and may include cylindrical, prismatic, coin, or pouch-type or kind batteries, and may be thin film batteries or may be rather bulky in size. Because the structure and manufacturing method of these batteries are well known in the art, a detailed description thereof will not be provided for conciseness.

Hereinafter, examples of the present disclosure and comparative examples are described. It is to be understood, however, that the examples are for the purpose of illustration and are not to be construed as limiting the present disclosure.

## Examples and Comparative Examples

### Examples 1 to 5

(1) Manufacture of Sealing Tape

2-ethylhexyl acrylate (EHA) as the first compound, isobornyl acrylate (IBOA) as the second compound, 2-hydroxyethyl acrylate (2-HEA) as the third compound, and acryloyl morpholine (ACMO) as the fourth compound were utilized.

The compounds were mixed in each composition shown in Table 1, and thus preparing a monomer mixture.

The monomer mixture was well mixed with Irgacure 651 (2,2-dimethoxy-2-phenylacetophenone) (Ciba Japan K.K.) as a polymerization initiator in a glass container based on 100 parts by weight of the monomer mixture (solid) and after replacing oxygen dissolved therein with nitrogen gas, partially polymerized by irradiation with ultraviolet rays with a low-pressure lamp for several minutes, obtaining a viscous liquid with a viscosity of about 1,500 cP. To the obtained composition, 0.3 parts by mass of the polymerization initiator (Irgacure 651) and 0.1 parts by mass of 1,6-hexanediol diacrylate (HDDA) were added and then, well mixed.

The obtained mixture was applied onto a 50 μm-thick polyester film (a releasing film) to perform a release treatment with a thickness of 100 μm. In order to remove oxygen adversely affecting the polymerization, the releasing film was covered, and a transparent adhesive sheet (sealing tape) was obtained from two surfaces of the releasing film by irradiation for about 3 minutes with a low-pressure lamp.

Then, the releasing film was removed for utilization.

### Comparative Examples 1 to 4

2-ethylhexyl acrylate (EHA) as the first compound, isobornyl acrylate (IBOA) as the second compound, 2-hydroxyethyl acrylate (2-HEA) as the third compound, and acetic acid (AA) as Compound A were utilized.

The compounds were mixed in each composition shown in Table 1, and thus obtaining a monomer mixture.

Substrate-free sealing tapes (double-sided adhesive layer) were prepared in substantially the same manner as in Examples 1 to 5, except for the monomer mixture was changed.

Table 1

| unit: parts per weight | | | | | | | | | | |
|---|---|---|---|---|---|---|---|---|---|---|
| Raw materials | | Examples | | | | | Comparative Examples | | | |
| | | 1 | 2 | 3 | 4 | 5 | 1 | 2 | 3 | 4 |
| First compound | EHA | 55 | 55 | 55 | 53 | 50 | 57 | 56 | 62 | 50 |
| Second compound | IBOA | 20 | 20 | 20 | 23 | 25 | 20 | 20 | 20 | 25 |
| Third compound | 2-HEA | 22 | 22 | 22 | 23 | 23 | 18 | 24 | 18 | 23 |
| Fourth compound | ACMO | 3 | 3 | 3 | 1 | 2 | - | - | - | - |
| Compound A | AA | - | - | - | - | - | 5 | 3 | - | 2 |

## Evaluation Examples

Physical properties of each of Examples and Comparative Examples were evaluated in the following manner.

### Evaluation Example 1: Strain Rate

Each sealing tape (double-sided adhesive layer) of the examples and the comparative examples was cut to have a horizontal length of 10 mm and a vertical length of 10 mm to prepare each specimen.

The specimens were each impregnated in a carbonate-based electrolyte solution, left for 1 day after being sealed at room temperature, and taken from the electrolyte solution and then, measured with respect to a length in a vertical direction of each specimen. Each measured value was put into Equations A and B to evaluate the length strain rate and width strain rate of the sealing tape (double-sided adhesive layer).

As the electrolyte solution, 1.1 M $LiPF_6$ was dissolved in a mixed solvent of ethylene carbonate (EC), dimethyl carbonate (DMC), propylene carbonate (PC), and fluorobenzene (FB), and a volume ratio of the mixed solvent was

EC:DMC:PC:FB=30:55:5:10.

**Equation A**

$$\text{Strain rate in a longitudinal direction} = (L2 - L1)/L1 \times 100$$

In Equation A,

L1 is a length in a vertical direction of the sealing tape (double-sided adhesive layer) measured before impregnation with the electrolyte solution, that is, 10 mm, and
L2 is length in a vertical direction of the sealing tape (double-sided adhesive layer) measured after impregnation with the electrolyte solution.

**Equation B**

$$\text{Strain rate in a width direction} = (L4 - L3)/L3 \times 100$$

In Equation B,

L3 is a length in a transverse direction of the sealing tape (double-sided adhesive layer) measured before impregnation with an electrolyte solution, that is, 10 mm, and
L4 is a length in a transverse direction of the sealing tape (double-sided adhesive layer) measured after impregnation with the electrolyte solution.

**Evaluation Example 2: Peel Strength**

Each sealing tape (double-sided adhesive layer) of the examples and the comparative examples was cut into a size of 100 mm x 10 mm (width x length), preparing a sample. On both sides of the cut sample (e.g., 200 shown in FIG. 6A), a negative electrode current collector (copper) (e.g., 112 shown in FIG. 6A) with a width x a length x a thickness (150 mm x 10 mm x 10 μm) was laminated, preparing a specimen shown in FIG. 6A.
The specimen was autoclaved under a pressure of 3.5 bar at 50 °C for 1000 seconds and fixed in a TA.XTplus Texture Analyzer (Stable Micro Systems). As shown in FIG. 6B, T-Peel peeling strength was measured at 25 °C in TA.XTplus Texture Analyzer by fixing a negative electrode substrate at one side and pulling another negative electrode substrate at the other side at 12.7 mm/min.

**Evaluation Example 3: Crosslinking Degree (Gel Fraction)**

1 g of each sealing tape (double-sided adhesive layer) of the examples and the comparative examples was weighed and then, utilized as a sample.
In a 20 mL vial, the sample (weight: 1 g) was put in a 200 wire mesh bag, and 1,2,4-trichlorobenzene (about 10 mL) was added thereto until the sample was sufficiently submerged therein and then, heated at a temperature of 130 °C for 2 hours or more.
Subsequently, an undissolved component not filtered through the 200 wire mesh bag was twice washed with a xylene solution and dried in a hot air oven at 120 °C for 12 hours. Finally, the dried undissolved component was weighed (weight: W mg), which is utilized for Equation C:

**Equation C**

$$\text{Gel fraction (\%)} = (W/WO) \times 100.$$

In Equation C,

W is a weight of the dried undissolved component, and
WO is a weight of the sample, that is, 1 g.

**Evaluation Example 4: Creep**

Each sealing tape (double-sided adhesive layer) of the examples and the comparative examples was cut into a size of 10 mm x 10 mm (width x length), preparing a sealing tape sample. On both surfaces of the cut sealing tape sample, a negative electrode current collector (copper) with a size of a width x a length x a thickness (40 mm x 10 mm x 10 μm) was laminated, preparing a specimen shown in FIG. 7A.

Referring to FIG. 7A, for convenience, one end portion of one negative electrode current collector (copper) was referred to as a first end portion, and one end portion of the other negative electrode current collector was referred to as a second end portion. The first end portion and the second end portion of two negative electrode substrates were respectively adhered to each other by the sealing tape in order of the first end portion of the one negative electrode current collector (copper)/ the sealing tape (double-sided adhesive layer) / the second end portion of the other negative electrode current collector (copper). Accordingly, the negative electrode current collector (copper) and the sealing tape (double-sided adhesive layer) had a contact area of a width x a length = 10 mm x 10 mm, preparing the specimen.

In the specimen, referring to FIG. 7B, a jig was fixed to both end portions of the negative electrode current collectors (copper) which were not adhered by the sealing tape. Each of the negative electrode current collectors (copper) and the jig had a contact area of a width x a length = 10 mm x 10 mm.

The specimen was evaluated with respect to creep at 25 °C by utilizing TA.XTplus Texture Analyzer (Stable Micro Systems). Referring to FIG. 7B, the sealing tape (double-sided adhesive layer) was measured with respect to an initial thickness (X0, unit: μm) deformation distance and a deformation distance after 60 seconds by fixing one jig and pulling the other jig at 60 mm/min with a force of 100 gf at 25 °C.

**Evaluation Example 5: Color Change upon Drying after Impregnating Electrolyte Solution**

The sealing tapes (double-sided adhesive layers) of the examples and the comparative examples were each supported in an electrolyte solution and dried and then, examined with respect to color changes with naked eyes.

As the electrolyte solution, 1.1 M $LiPF_6$ was dissolved in a mixed solvent of ethylene carbonate (EC), dimethyl carbonate (DMC), propylene carbonate (PC), and fluorobenzene (FB), and a volume ratio of the mixed solvent was EC:DMC:PC:FB = 30:55:5:10.

**Evaluation is based on the following criteria.**

None: When no color change is observed with the naked eyes
Browning: When a color change to brown is observed with the naked eyes

**Evaluation Example 6: Initial Resistance and Resistance Change Rate**

Each sealing tape (double-sided adhesive layer) of the examples and the comparative examples was measured with respect to resistance by connecting terminals to positive and negative electrodes and utilizing a battery impedance meter, BT4560 made by HIOKI E.E. Corp.

Table 2

| Evaluation of properties | | Examples | | | | | Comparative Examples | | | |
|---|---|---|---|---|---|---|---|---|---|---|
| Evaluation factor | unit | 1 | 2 | 3 | 4 | 5 | 1 | 2 | 3 | 4 |
| Thickness | μm | 50 | 75 | 100 | 50 | 75 | 50 | 50 | 50 | 75 |
| Length strain rate | % | 75 | 83 | 90 | 72 | 70 | 80 | 87 | 82 | 65 |
| Width strain rate | % | 85 | 90 | 95 | 80 | 74 | 85 | 89 | 89 | 68 |
| Peel strength | gf/cm | 180 | 201 | 252 | 205 | 231 | 190 | 201 | 140 | 245 |
| Crosslinking degree (gel content (e.g., amount)) | % | 91.5 | 92 | 91.8 | 91.3 | 91.2 | 92 | 92.4 | 91.4 | 93.5 |
| Initial Creep | μm | 128 | 149 | 232 | 127 | 145 | 156 | 230 | 140 | 140 |
| Creep strain rate (60s) | % | 25 | 41 | 48 | 22 | 33 | 20 | 27 | 35 | 31 |

(continued)

| Evaluation of properties | | Examples | | | | | Comparative Examples | | | |
|---|---|---|---|---|---|---|---|---|---|---|
| Peeling after 1 day at 30 °C (jelly roll unwinding) | - | OK | OK | OK | OK | OK | OK | OK | NG | OK |
| Color change after impregnation in electrolyte solution | - | No | No | No | No | No | bro wn | bro wn | No | bro wn |
| Initial resistance | mΩ | 12.8 | 13.1 | 13.5 | 12.5 | 13 | 15.2 | 16 | 13 | 15 |
| Resistance change rate (7 days) | % | 2.8 | 3 | 3 | 2.9 | 3 | 7 | 6 | 3 | 4 |

**Comprehensive Evaluation Results**

Referring to Evaluation Examples 1 to 6, the sealing tape of one or more embodiments represented by Examples 1 to 5 is attached to an external gap where fluid does not exist and/or an internal gap where fluid exists, and thus while constantly securing a gap between the inner wall of the battery case and the electrode assembly, separation of the electrode assembly from the inner wall of the battery case may be prevented or reduced.

Furthermore, in the rechargeable lithium battery to which the sealing tape of one or more embodiments is applied, an increase in internal resistance of the battery, damage to an electrode tab, and/or the like are suppressed or reduced; and the performance of the battery may be maintained.

In the present disclosure, "or" is not to be construed as an exclusive meaning, for example, "A or B" is construed to include A, B, A+B, and/or the like. Further, as used herein, the term "and/or" includes any and all combinations of one or more of the associated listed items. The "/" utilized herein may be interpreted as "and" or as "or" depending on the situation. Expressions such as "at least one of," "one of," and "selected from," when preceding a list of elements, modify the entire list of elements and do not modify the individual elements of the list. For example, "at least one of a, b, or c", "at least one of a, b, and/or c", "at least one selected from a, b, and c", "at least one selected from among a to c", etc. may indicate only a, only b, only c, both (e.g., simultaneously) a and b, both (e.g., simultaneously) a and c, both (e.g., simultaneously) b and c, all of a, b, and c, or variations thereof.

In the present disclosure, although the terms "first," "second," etc., may be utilized herein to describe one or more elements, components, regions, and/or layers, these elements, components, regions, and/or layers should not be limited by these terms. These terms are only utilized to distinguish one component from another component.

As utilized herein, the singular forms "a," "an," and "the" are intended to include the plural forms as well, unless the context clearly indicates otherwise. Further, the utilization of "may" when describing embodiments of the present disclosure refers to "one or more embodiments of the present disclosure".

As utilized herein, the term "substantially," "about," and similar terms are utilized as terms of approximation and not as terms of degree, and are intended to account for the inherent deviations in measured or calculated values that would be recognized by those of ordinary skill in the art. "About" or "approximately," as utilized herein, is inclusive of the stated value and means within an acceptable range of deviation for the particular value as determined by one of ordinary skill in the art, considering the measurement in question and the error associated with measurement of the particular quantity (i.e., the limitations of the measurement system). For example, "about" may mean within one or more standard deviations, or within ± 30%, 20%, 10%, 5% of the stated value.

Also, any numerical range recited herein is intended to include all subranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein and any minimum numerical limitation recited in this specification is intended to include all higher numerical limitations subsumed therein.

In the present disclosure, when the electrode active material particles are spherical, "size" or "diameter" indicates a particle diameter or an average particle diameter, and when the particles are non-spherical, the "size" or "diameter" indicates a major axis length or an average major axis length. That is, when particles are spherical, "diameter" indicates a particle diameter, and when the particles are non-spherical, the "diameter" indicates a major axis length. The size or diameter of the particles may be measured utilizing a scanning electron microscope or a particle size analyzer. As the particle size analyzer, for example, HORIBA, LA-950 laser particle size analyzer, may be utilized. When the size of the particles is measured utilizing a particle size analyzer, the average particle diameter (or size) is referred to as D50. D50

refers to the average diameter (or size) of particles whose cumulative volume corresponds to 50 vol% in the particle size distribution (e.g., cumulative distribution), and refers to the value of the particle size corresponding to 50% from the smallest particle when the total number of particles is 100% in the distribution curve accumulated in the order of the smallest particle size to the largest particle size.

While the present disclosure has been described in connection with what is presently considered to be practical example embodiments, it is to be understood that the present disclosure is not limited to the disclosed embodiments. In contrast, it is intended to cover one or more suitable modifications and equivalent arrangements included within the scope of the appended claims and equivalents thereof.

The present invention may also be defined by reference to the following clauses:

Clause 1. A sealing tape for a rechargeable lithium battery, the sealing tape comprising:

an adhesive layer having adhesiveness on both surfaces of the adhesive layer,
wherein the adhesive layer comprises a (meth)acrylic copolymer and a crosslinking agent, and
the (meth)acrylic copolymer comprises:

a moiety derived from a first substituted or unsubstituted C1 to C20 alkyl (meth)acrylate-based compound;
a moiety derived from a second substituted or unsubstituted C3 to C20 cycloalkyl (meth)acrylate-based compound;
a moiety derived from a third hydroxy group-containing compound; and
a moiety derived from a fourth unsaturated morpholine-containing compound.

Clause 2. The sealing tape as claimed in clause 1, wherein
in the adhesive layer, the (meth)acrylic copolymer is crosslinked by the crosslinking agent to form a polymer having a semi-interpenetrating polymer network structure.

Clause 3. The sealing tape as claimed in clause 2, wherein
the polymer having the semi-interpenetrating polymer network structure comprises:

a network structured polymer formed by crosslinking the (meth)acrylic copolymer by the crosslinking agent; and
independently of the network structured polymer, a linear polymer comprising the (meth)acrylic copolymer.

Clause 4. The sealing tape as claimed in clause 2 or clause 3, wherein
a crosslinking degree of the adhesive layer is about 85 to about 98%.

Clause 5. The sealing tape as claimed in any one of clauses 1 to 4, wherein
the crosslinking agent is a multi-functional (meth)acrylate.

Clause 6. The sealing tape as claimed in any one of clauses 1 to 5, wherein
in the adhesive layer, an amount of the crosslinking agent is about 0.01 to about 5 parts by weight based on 100 parts by weight of the (meth)acrylic copolymer.

Clause 7. The sealing tape as claimed in any one of clauses 1 to 6, wherein

the first substituted or unsubstituted C1 to C20 alkyl (meth)acrylate-based compound is selected from among ethyl hexyl (meth)acrylate, methyl(meth) acrylate, ethyl (meth)acrylate, propyl (meth)acrylate, butyl (meth)acrylate, pentyl (meth)acrylate, hexyl (meth)acrylate, heptyl (meth)acrylate, octyl (meth)acrylate, nonyl (meth)acrylate, decyl (meth)acrylate, dodecyl (meth)acrylate, lauryl (meth)acrylate, and any combination thereof.

Clause 8. The sealing tape as claimed in any one of clauses 1 to 7, wherein

the second substituted or unsubstituted C3 to C20 cycloalkyl (meth)acrylate-based compound is selected from among
isobornyl (meth)acrylate, bornyl (meth)acrylate, cyclohexyl (meth)acrylate, and any combination thereof.

Clause 9. The sealing tape as claimed in any one of clauses 1 to 8, wherein

the third hydroxy group-containing compound is selected from among

2-hydroxyethyl (meth)acrylate, 4-hydroxybutyl (meth)acrylate, 2-hydroxypropyl (meth)acrylate, 2-hydroxybutyl (meth)acrylate, 6-hydroxyhexyl (meth)acrylate, 1,4-cyclohexanedimethanol mono(meth)acrylate, chloro-2-hydroxypropyl acrylate, diethylene glycol mono(meth)acrylate, allyl alcohol, and any combination thereof.

Clause 10. The sealing tape as claimed in any one of clauses 1 to 9, wherein
the fourth unsaturated morpholine-containing compound is selected from among vinyl morpholine, acryloyl morpholine, methacryloyl morpholine, and any combination thereof.

Clause 11. The sealing tape as claimed in any one of clauses 1 to 10, wherein
the (meth)acrylic copolymer comprises:

about 60 to about 95 wt% of the moiety derived from the first substituted or unsubstituted C1 to C20 alkyl (meth)acrylate-based compound;
about 0.5 to about 25 wt% of the moiety derived from the second substituted or unsubstituted C3 to C20 cycloalkyl (meth)acrylate-based compound;
about 0.5 to about 25 wt% of the moiety derived from the third hydroxy group-containing compound; and
about 0.1 to about 15 wt% of the moiety derived from the fourth unsaturated morpholine-containing compound,
based on 100 wt% of a total amount of the (meth)acrylic copolymer.

Clause 12. The sealing tape as claimed in any one of clauses 1 to 11, wherein
the (meth)acrylic copolymer further comprises
a moiety derived from a fifth compound having an ethylene oxide group.

Clause 13. The sealing tape as claimed in clause 12, wherein
the (meth)acrylic copolymer comprises:

about 60 to about 95 wt% of the moiety derived from the first substituted or unsubstituted C1 to C20 alkyl (meth)acrylate-based compound;
about 0.5 to about 25 wt% of the moiety derived from the second substituted or unsubstituted C3 to C20 cycloalkyl (meth)acrylate-based compound;
about 0.5 to about 25 wt% of the moiety derived from the third hydroxy group-containing compound;
about 0.1 to about 15 wt% of the moiety derived from the fourth unsaturated morpholine-containing compound; and
about 0.1 to about 15 wt% of the moiety derived from the fifth compound,
based on 100 wt% of a total amount of the (meth)acrylic copolymer.

Clause 14. The sealing tape as claimed in any one of clauses 1 to 13, wherein the (meth)acrylic copolymer has a viscosity at 25 °C of about 1000 to about 4500 cp.

Clause 15. The sealing tape as claimed in any one of clauses 1 to 14, wherein the (meth)acrylic copolymer has an acid value of less than or equal to about 0.5 mg KOH/g.

Clause 16. The sealing tape as claimed in any one of clauses 1 to 15, wherein a thickness of the adhesive layer is about 5 to about 150 μm.

Clause 17. The sealing tape as claimed in any one of clauses 1 to 16, wherein based on impregnated in an electrolyte at 25 °C for 120 minutes,
the adhesive layer has an expansion rate according to Equation 1 of about 50 to about 150%:

Equation 1

$$(B-A)/A$$

wherein, in Equation 1,

A is a thickness of the adhesive layer before electrolyte solution impregnation, and
B is a thickness of the adhesive layer after electrolyte solution impregnation.

Clause 18. The sealing tape as claimed in any one of clauses 1 to 17, wherein the sealing tape further comprises:

a substrate layer, and
the adhesive layer is on both surfaces of the substrate layer.

Clause 19. The sealing tape as claimed in clause 18, wherein
the substrate layer comprises a urethane film, an acrylic film, an epoxy film, a polyethylene terephthalate film, a hard coating layer, a poly (ethylene-vinyl acetate) film, or a combination thereof.

Clause 20. A rechargeable lithium battery, comprising:

an electrode assembly;
an electrolyte solution impregnated in the electrode assembly;
the sealing tape according to any one of clauses 1 to 19 attached to at least a portion of an inside of the electrode assembly; and
a battery case accommodating the electrode assembly.

Clause 21. The rechargeable lithium battery as claimed in clause 20, wherein the electrode assembly comprises:

a positive electrode comprising a positive electrode current collector and a positive electrode active material layer on the positive electrode current collector;
a negative electrode comprising a negative electrode current collector and a negative electrode active material layer on the negative electrode current collector; and
a separator separating the positive electrode and the negative electrode.

Clause 22. The rechargeable lithium battery as claimed in clause 21, wherein
at least one of the positive electrode current collector or the negative electrode current collector comprises plastic.

Clause 23. The rechargeable lithium battery as claimed in any one of clauses 20 to 22, further comprising:
a gel polymer electrolyte, a polymer electrolyte, or a combination thereof.

**Reference Numerals**

1, 1': (meth)acrylic copolymer
2: crosslinking agent
100: rechargeable lithium battery
112: negative electrode
113: separator
114: positive electrode
120: battery case
140: sealing member
200: sealing tape
210: adhesive layer
220: substrate layer
300: semi-interpenetrating polymer network (semi-IPN) structure

## Claims

**1.** A sealing tape for a rechargeable lithium battery, the sealing tape comprising:

an adhesive layer having adhesiveness on both surfaces of the adhesive layer,
wherein the adhesive layer comprises a (meth)acrylic copolymer and a crosslinking agent, and
the (meth)acrylic copolymer comprises:

a moiety derived from a first substituted or unsubstituted C1 to C20 alkyl (meth)acrylate-based compound;

a moiety derived from a second substituted or unsubstituted C3 to C20 cycloalkyl (meth)acrylate-based compound;
a moiety derived from a third hydroxy group-containing compound; and
a moiety derived from a fourth unsaturated morpholine-containing compound.

**2.** The sealing tape as claimed in claim 1, wherein
in the adhesive layer, the (meth)acrylic copolymer is crosslinked by the crosslinking agent to form a polymer having a semi-interpenetrating polymer network structure.

**3.** The sealing tape as claimed in claim 2, wherein:

(i) the polymer having the semi-interpenetrating polymer network structure comprises:

a network structured polymer formed by crosslinking the (meth)acrylic copolymer by the crosslinking agent; and
independently of the network structured polymer, a linear polymer comprising the (meth)acrylic copolymer; and/or

(ii) a crosslinking degree of the adhesive layer is about 85 to about 98%.

**4.** The sealing tape as claimed in any one of claims 1 to 3, wherein:

(i) the crosslinking agent is a multi-functional (meth)acrylate; and/or
(ii) in the adhesive layer, an amount of the crosslinking agent is about 0.01 to about 5 parts by weight based on 100 parts by weight of the (meth)acrylic copolymer.

**5.** The sealing tape as claimed in any one of claims 1 to 4, wherein

the first substituted or unsubstituted C1 to C20 alkyl (meth)acrylate-based compound is selected from among ethyl hexyl (meth)acrylate, methyl(meth) acrylate, ethyl (meth)acrylate, propyl (meth)acrylate, butyl (meth)acrylate, pentyl (meth)acrylate, hexyl (meth)acrylate, heptyl (meth)acrylate, octyl (meth)acrylate, nonyl (meth)acrylate, decyl (meth)acrylate, dodecyl (meth)acrylate, lauryl (meth)acrylate, and any combination thereof.

**6.** The sealing tape as claimed in any one of claims 1 to 5, wherein

the second substituted or unsubstituted C3 to C20 cycloalkyl (meth)acrylate-based compound is selected from among
isobornyl (meth)acrylate, bornyl (meth)acrylate, cyclohexyl (meth)acrylate, and any combination thereof.

**7.** The sealing tape as claimed in any one of claims 1 to 6, wherein

the third hydroxy group-containing compound is selected from among
2-hydroxyethyl (meth)acrylate, 4-hydroxybutyl (meth)acrylate, 2-hydroxypropyl (meth)acrylate, 2-hydroxybutyl (meth)acrylate, 6-hydroxyhexyl (meth)acrylate, 1,4-cyclohexanedimethanol mono(meth)acrylate, chloro-2-hydroxypropyl acrylate, diethylene glycol mono(meth)acrylate, allyl alcohol, and any combination thereof.

**8.** The sealing tape as claimed in any one of claims 1 to 7, wherein

the fourth unsaturated morpholine-containing compound is selected from among
vinyl morpholine, acryloyl morpholine, methacryloyl morpholine, and any combination thereof.

**9.** The sealing tape as claimed in any one of claims 1 to 8, wherein the (meth)acrylic copolymer comprises:

about 60 to about 95 wt% of the moiety derived from the first substituted or unsubstituted C1 to C20 alkyl (meth)acrylate-based compound;
about 0.5 to about 25 wt% of the moiety derived from the second substituted or unsubstituted C3 to C20 cycloalkyl (meth)acrylate-based compound;
about 0.5 to about 25 wt% of the moiety derived from the third hydroxy group-containing compound; and

about 0.1 to about 15 wt% of the moiety derived from the fourth unsaturated morpholine-containing compound, based on 100 wt% of a total amount of the (meth)acrylic copolymer.

**10.** The sealing tape as claimed in any one of claims 1 to 9, wherein the (meth)acrylic copolymer further comprises

a moiety derived from a fifth compound having an ethylene oxide group, optionally wherein
the (meth)acrylic copolymer comprises:

about 40 to about 95 wt% of the moiety derived from the first substituted or unsubstituted C1 to C20 alkyl (meth)acrylate-based compound;
about 0.5 to about 25 wt% of the moiety derived from the second substituted or unsubstituted C3 to C20 cycloalkyl (meth)acrylate-based compound;
about 0.5 to about 25 wt% of the moiety derived from the third hydroxy group-containing compound;
about 0.1 to about 15 wt% of the moiety derived from the fourth unsaturated morpholine-containing compound; and
about 0.1 to about 15 wt% of the moiety derived from the fifth compound,
based on 100 wt% of a total amount of the (meth)acrylic copolymer.

**11.** The sealing tape as claimed in any one of claims 1 to 10, wherein:

(i) the (meth)acrylic copolymer has
a viscosity at 25 °C of about 1000 to about 4500 cp; and/or
(ii) the (meth)acrylic copolymer has
an acid value of less than or equal to about 0.5 mg KOH/g; and/or
(iii) a thickness of the adhesive layer is about 5 to about 150 μm; and/or
(iv) based on impregnated in an electrolyte at 25 °C for 120 minutes,
the adhesive layer has an expansion rate according to Equation 1 of about 50 to about 150%:

Equation 1

$$(B-A)/A$$

wherein, in Equation 1,

A is a thickness of the adhesive layer before electrolyte solution impregnation, and
B is a thickness of the adhesive layer after electrolyte solution impregnation.

**12.** The sealing tape as claimed in any one of claims 1 to 11, wherein the sealing tape further comprises:

a substrate layer, and
the adhesive layer is on both surfaces of the substrate layer, optionally wherein
the substrate layer comprises a urethane film, an acrylic film, an epoxy film, a polyethylene terephthalate film, a hard coating layer, a poly (ethylene-vinyl acetate) film, or a combination thereof.

**13.** A rechargeable lithium battery, comprising:

an electrode assembly;
an electrolyte solution impregnated in the electrode assembly;
the sealing tape according to any one of claims 1 to 12 attached to at least a portion of an inside of the electrode assembly; and
a battery case accommodating the electrode assembly.

**14.** The rechargeable lithium battery as claimed in claim 13, wherein the electrode assembly comprises:

a positive electrode comprising a positive electrode current collector and a positive electrode active material layer on the positive electrode current collector;
a negative electrode comprising a negative electrode current collector and a negative electrode active material

layer on the negative electrode current collector; and
a separator separating the positive electrode and the negative electrode, optionally wherein
at least one of the positive electrode current collector or the negative electrode current collector comprises plastic.

**15.** The rechargeable lithium battery as claimed in claim 13 or claim 14, further comprising:
a gel polymer electrolyte, a polymer electrolyte, or a combination thereof.

FIG. 1

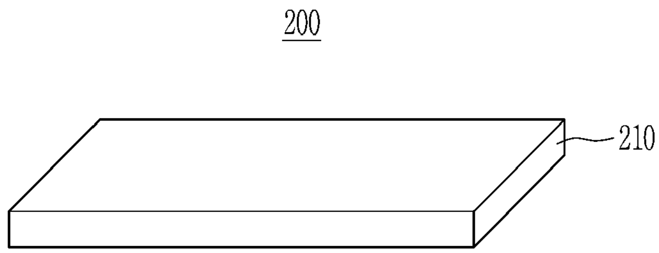

FIG. 2

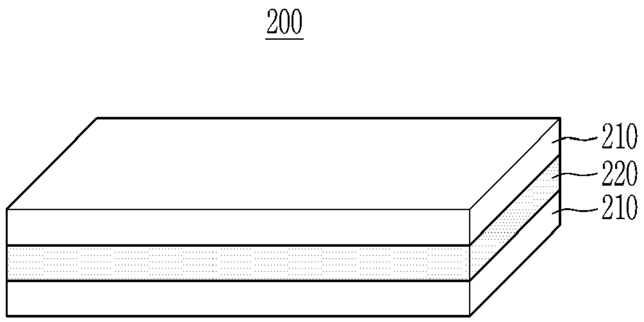

FIG. 3

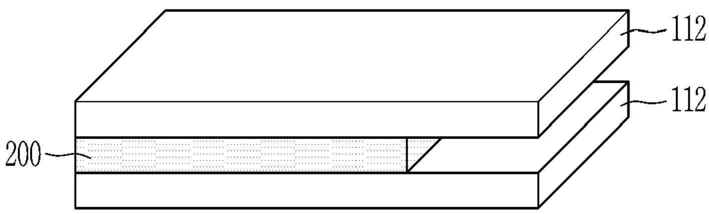

FIG. 4

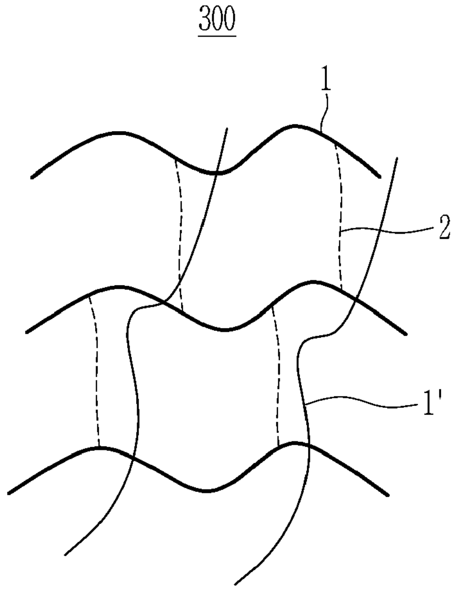

FIG. 5

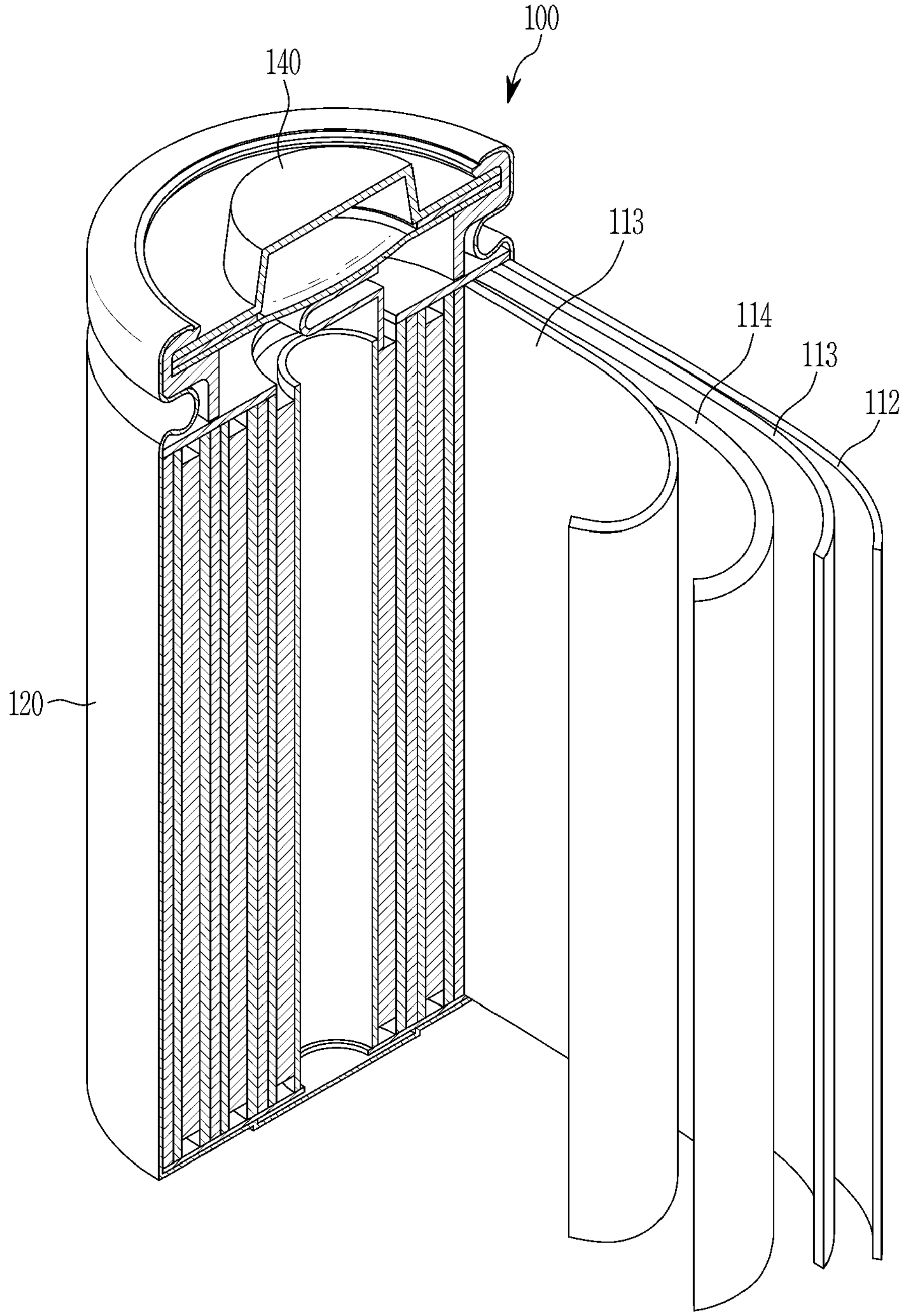

FIG. 6A

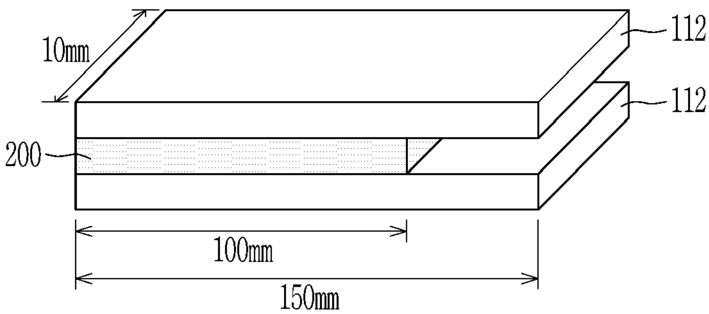

FIG. 6B

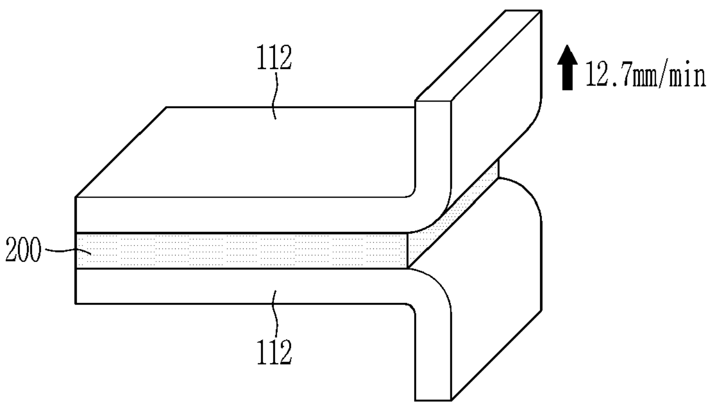

FIG. 7A

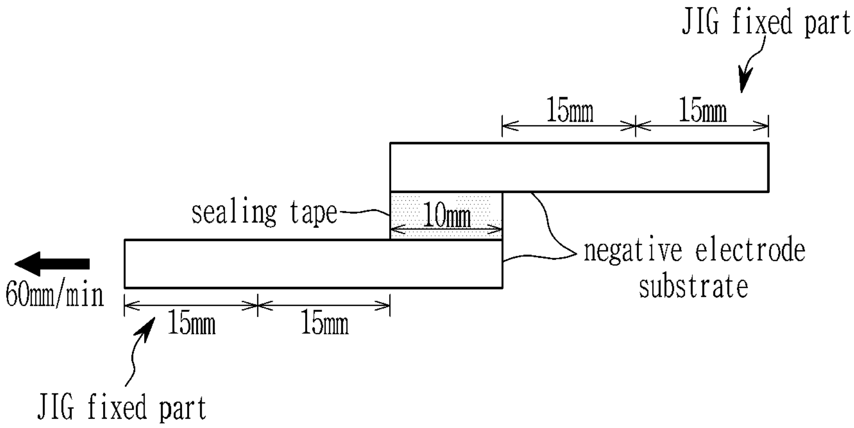
JIG fixed part
15mm
15mm
sealing tape
10mm
negative electrode substrate
60mm/min
15mm
15mm
JIG fixed part

FIG. 7B

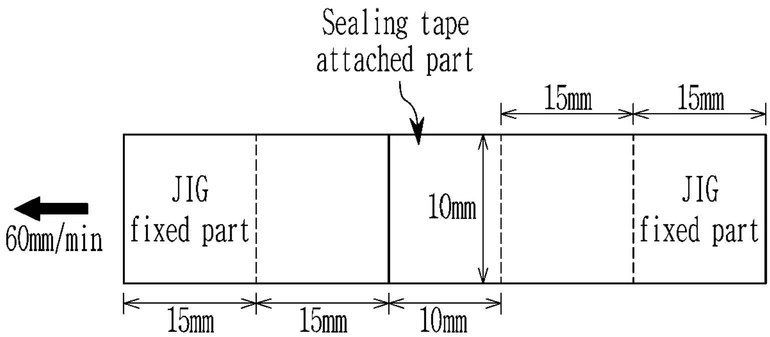
Sealing tape
attached part
15mm
15mm
JIG
fixed part
10mm
JIG
fixed part
60mm/min
15mm
15mm
10mm

Europäisches Patentamt
European Patent Office
Office européen des brevets

# EUROPEAN SEARCH REPORT

Application Number
EP 23 20 6859

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2013/345333 A1 (KIM LEE JUNE [KR] ET AL) 26 December 2013 (2013-12-26)<br>* paragraph [0003]; examples; table 1 *<br>----- | 1-9,11 | INV.<br>C09J7/38<br>H01M10/052 |
| X | JP 2019 077784 A (LINTEC CORP)<br>23 May 2019 (2019-05-23)<br>* paragraphs [0132], [0134]; example 9; table 1 *<br>----- | 1-9,11 | |
| Y | US 2017/244087 A1 (KAWABE SHIGEKI [JP])<br>24 August 2017 (2017-08-24)<br>* paragraphs [0005], [0031], [0092], [0093]; claims; example 3; table 1 *<br>----- | 10,12-15 | |
| Y | US 2018/159166 A1 (ANSAI TAKESHI [JP] ET AL) 7 June 2018 (2018-06-07)<br>* paragraphs [0001], [0032], [0080]; claims *<br>----- | 10,12-15 | |

TECHNICAL FIELDS SEARCHED (IPC)

C09J
C08J
H01M

The present search report has been drawn up for all claims

1

| Place of search | Date of completion of the search | Examiner |
|---|---|---|
| Munich | 9 April 2024 | Kahl, Philipp |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

## ANNEX TO THE EUROPEAN SEARCH REPORT ON EUROPEAN PATENT APPLICATION NO. EP 23 20 6859

This annex lists the patent family members relating to the patent documents cited in the above-mentioned European search report. The members are as contained in the European Patent Office EDP file on
The European Patent Office is in no way liable for these particulars which are merely given for the purpose of information.

09-04-2024

| Patent document cited in search report | Publication date | Patent family member(s) | Publication date |
|---|---|---|---|
| US 2013345333 A1 | 26-12-2013 | CN 103509475 A | 15-01-2014 |
| | | EP 2679646 A2 | 01-01-2014 |
| | | KR 20140001345 A | 07-01-2014 |
| | | TW 201410833 A | 16-03-2014 |
| | | US 2013345333 A1 | 26-12-2013 |
| JP 2019077784 A | 23-05-2019 | CN 109694655 A | 30-04-2019 |
| | | JP 7008467 B2 | 25-01-2022 |
| | | JP 2019077784 A | 23-05-2019 |
| | | KR 20190045855 A | 03-05-2019 |
| | | TW 201922990 A | 16-06-2019 |
| US 2017244087 A1 | 24-08-2017 | CN 107118704 A | 01-09-2017 |
| | | EP 3211687 A1 | 30-08-2017 |
| | | US 2017244087 A1 | 24-08-2017 |
| US 2018159166 A1 | 07-06-2018 | CN 108165189 A | 15-06-2018 |
| | | JP 6363156 B2 | 25-07-2018 |
| | | JP 2018090750 A | 14-06-2018 |
| | | KR 20180065877 A | 18-06-2018 |
| | | US 2018159166 A1 | 07-06-2018 |

EPO FORM P0459

For more details about this annex : see Official Journal of the European Patent Office, No. 12/82